# EUROPÄISCHE PATENTSCHRIFT

(11) **EP 0 921 384 B1**
(45) Veröffentlichungstag und Bekanntmachung des Hinweises auf die Patenterteilung: **19.01.2005**
(21) Anmeldenummer: 98121356.4
(22) Anmeldetag: 10.11.1998
(51) Int. Cl.: G01L 1/22, H01C 10/10, H01C 17/07, G01L 3/10, B62D 5/04

(54) **Elektrischer Widerstand ( DMS ) auf einem Trägerelement durch Abziehen und Aufsintern ( Lenkhilfesystem )**
Electrical resistor ( strain gauge ) mounted on a carrier element by pulling off a backing element and sintering ( power assisted steering system )
Résistance électrique ( jauge de contrainte ) sur un élément porteur par décalquage et frittage ( système d'assistance de direction )

(30) Priorität: 04.12.1997 DE 19753800
(43) Veröffentlichungstag der Anmeldung: 09.06.1999
(73) Patentinhaber: Siemens Aktiengesellschaft, 80333 München (DE)
(72) Erfinder: Mattmann, Erich, 55262 Heidesheim (DE); Weber, Klaus, 61476 Kronberg (DE)

(56) Entgegenhaltungen:
- EP-A- 0 561 397
- WO-A-95/11433
- US-A- 3 803 708
- US-A- 5 242 722
- US-A- 5 349 746

## Beschreibung

Die Erfindung betrifft ein Verfahren zur Herstellung eines elektrischen Widerstandes , insbesondere eines Dehnungsmeßstreifens, bei welchem auf einem Trägerelement nacheinander und übereinander eine Isolationsschicht und eine Widerstandsschicht aufgebracht werden sowie eine entsprechende Anwendung zur Herstellung eines mechanisch-elektrischen Wandlers.

Gemäß der DE 34 29 649 A1 (EP-A1-171 467) sind derartige, als Dehnungsmeßstreifen verwendbare Widerstände bekannt. Ein solcher Widerstand weist eine auf einen Träger aufgebrachte Widerstandsschicht auf, wobei zwischen Träger und Widerstandsschicht eine elektrisch nicht leitende Schicht angeordnet ist.

Die Widerstandsschicht und/oder die nicht leitende Schicht wird auf den Träger entweder aufgedampft oder aufgesputtert.

Der Träger, auf welchem der oben erläuterte Schichtaufbau aufgebracht wird, ist dabei eine kleine Fläche. Soll eine solche Struktur auf nichtplane Flächen aufgebracht werden, so ist die oben beschriebene Vorgehensweise nicht mehr möglich, da die Einhaltung von vorher genau dimensionierten elektrischen Eigenschaften nicht mehr gewährleistet ist.

Aus der US-PS 3 803 708 ist ein Verfahren zur Herstellung eines Widerstandes bekannt, bei welchem die auf ein Substrat aufzubringende Trägerschicht auf einem Trägerblatt als Zwischenträger angeordnet ist. Allerdings ist dieses Trägerblatt hinterseitig von der Struktur abzuziehen, was die Positionierung auf der nichtplanen Oberfläche des Substrates erschwert.

Der Erfindung liegt somit die Aufgabe zugrunde, ein Verfahren zur Herstellung eines elektrischen Widerstandes anzugeben, welcher zuverlässig auf Trägerelemente mit nichtplanen Oberflächen aufgebracht werden kann.

Erfindungsgemäß wird die Aufgabe nach dem Anspruch 1 gelöst.

Der Vorteil der Erfindung besteht darin, dass die vorhandene Struktur auf einem Trägermaterial in Form des Trägerblattes hergestellt wird und nach der Herstellung mit Hilfe der Transportfolie in der Art eines Abziehbildes auf das Trägerelement platziert wird. Aufgrund dieser Verfahrensweise lässt sich die gewünschte Schichtstruktur auf jede erdenkliche geometrische Form des Trägerelementes aufziehen und bei der sich anschließenden Wärmebehandlung zu einer haftfesten Schicht sintern.

Auf diese Weise wird ein Widerstand hergestellt, der auch bei lang anhaltender mechanischer und thermischer Belastung zuverlässig auf nichtplanen Oberflächen von Trägerelementen haftet. Dies ist insbesondere dann vorteilhaft, wenn das Trägerelement ein mechanisch zu belastendes Bauteil ist, welches aus sinterfähigem Material besteht.

Vorteilhafterweise ist die Isolations- oder die Widerstandsschicht in Drucktechnik auf das Trägerblatt aufgebracht und getrocknet. Somit ist es nicht nur möglich einfache unstrukturierte Schichten, sondern auch strukturierte Gebilde wie ganze Widerstands-Netzwerke auf einer nichtplanaren Oberfläche eines Trägerelementes aufzubringen.

Mit Hilfe eines solchen Herstellungsverfahrens lassen sich Abrollstrukturen herstellen, die von einem Rechner bestimmte Abmessungen aufweisen, die erst bei Aufbringung auf die nichtplane Oberfläche ihre erforderliche geometrische Struktur und Abmaße erhalten.

In einer Weiterbildung wird nach dem Aufbringen der Isolationsschicht auf dem Trägerblatt eine Widerstandsschicht auf dieser Isolationsschicht aufgebracht, wobei anschließend die die Isolationsschicht und die Widerstandsschicht vollständig überdeckende Folienschicht angeordnet wird.

Bei dieser Ausführung sind sowohl die Isolationsschicht als auch die Widerstandsschicht auf einem einzigen Trägerblatt angeordnet, und werden mit nur einer Folienschicht transportiert.

In einer Ausgestaltung wird die Isolationsschicht in Form einer Glasfritte auf das Trägerblatt aufgedruckt, nach dem Trocknen der Glasfritte wird eine Leitpaste als Widerstandsschicht auf die Isolationsschicht aufgedruckt und getrocknet, wobei anschließend die Folienschicht in Form eines Kunstharzfilmes aufgebracht wird.

Alternativ dazu wird eine auf einem ersten Trägerblatt angeordnete und getrocknete Isolationsschicht auf das Trägerelement mittels der Folienschicht aufgebracht und wärmebeaufschlagt, und anschließend die auf einem zweiten Trägerblatt gedruckte und getrocknete Widerstandsschicht mit Hilfe einer auf ihr angeordneten zweiten Folienschicht auf der schon wärmebehandelten Isolationsschicht positioniert und anschließend ebenfalls wärmebehandelt.

Das Verfahren hat den Vorteil, daß je nach Anwendungsfall sowohl die gesamte Struktur auf einem Trägerblatt herstellbar ist und mittels einer einzigen Folienschicht vom Trägerblatt auf das Trägerelement transportiert werden kann oder aber auch jede Schicht der Struktur einzeln auf einem Trägerblatt hergestellt wird. Die einzeln hergestellte Schicht wird ebenfalls mittels einer Folie auf dem Trägerelement positioniert.

Bei einer Anwendung eines Verfahrens nach dem Anspruch 1 zur Herstellung eines mechanisch-elektrischen Wandlers, der dehnungsempfindliche Meßwiderstände aufweist, die auf einer auf einem Trägerelement angeordneten Isolationsschicht aufgebracht werden, werden die Meßwiderstände und Strukturen einer Auswerteelektronik auf einer gemeinsamen Isolationsschicht aufgebracht, wobei mindestens die Isolationsschicht auf ein Trägerblatt aufgebracht wird, wobei die die Isolationsschicht tragende Seite des Trägerblattes mit einer flexiblen Folienschicht überdeckt wird, deren Haftung an der Isolationsschicht größer ist als die Haftung des Trägerblattes an der Isolationsschicht, wobei die Folienschicht mit der Isolationsschicht von dem Trägerblatt abgezogen und auf das Trägerelement aufgebracht wird, wobei das Trägerelement zum Ausbrennen der Folie und zum Aufsintern der Isolationsschicht wärmebeaufschlagt wird.

Mit solchen Herstellungsmethoden lassen sich kleinste Sensorstrukturen auch auf verwinkelte Strukturen des Trägerelementes einfach und korrekt aufbringen.

In einer Ausgestaltung wird auf das Trägerblatt vor dem Aufbringen der Folienschicht die Isolationsschicht, eine Leiterbahnschicht und darauf eine Widerstandsstrukturschicht, die die dehnungsempfindlichen Meßwiderstände und Dickschichtwiderstände der Auswerteelektronik aufweist, nacheinander aufgedruckt und getrocknet, wobei die Folienschicht die Anordnung von Isolations-, Leiterbahn- und Widerstandsstrukturschicht vollständig überdeckt und diese Anordnung mit Hilfe der Folienschicht vom Trägerblatt entfernt und so auf das Trägerelement aufgelegt wird, so daß die Isolationsschicht in direktem Kontakt mit dem Trägerelement steht.

Der Vorteil dieses Verfahrens besteht darin, daß die gesamte Sensorstruktur in einem Schritt auf dem Trägerelement positioniert wird.

Um die Haftung dieser Sensorstruktur auf dem Trägerelement zu gewährleisten, wird vor dem Auflegen der Isolationsschicht das Trägerelement mit einem Haftvermittler benetzt.

Insbesondere wenn das Trägerelement das mechanisch zu belastende Bauteil ist, wird durch den Wegfall eines Zwischenträgers die Isolationsschicht unmittelbar auf dem mechanisch zu belastenden Bauteil angeordnet. Die zu detektierende mechanische Belastung wird dabei direkt vom zu belastenden Bauteil abgegriffen, ohne daß Signalverfälschungen durch den Zwischenträger auftreten. Durch die nachfolgende Wärmebehandlung sind die Isolationsschicht und das mechanisch zu belastende Bauteil innig miteinander verbunden.

In einer anderen Weiterbildung wird nach der Wärmebehandlung der Isolationsschicht auf dem Trägerelement die auf einem zweiten Trägerblatt hergestellte Leiterbahnschicht mit Hilfe der über dieser Leiterbahnschicht angeordneten zweiten Folienschicht von diesem zweiten Trägerblatt abgezogen und auf der Isolationsschicht positioniert, anschließend wird das Trägerelement einer weiteren Wärmebehandlung unterzogen und nach dieser Wärmebehandlung wird auf die Leiterbahnschicht die auf einem weiteren Trägerblatt erzeugte Widerstandsstrukturschicht mittels einer diese Widerstandsstrukturschicht überdeckenden dritten Folienschicht auf die Leiterbahnschicht aufgebracht und ebenfalls wärmebehandelt. So kann jede Schicht einzeln hergestellt und einzeln auf dem Trägerelement aufgesintert werden. Dies hat insbesondere für die Widerstandsstrukturschicht den Vorteil, daß Widerstandsänderungen, welche sich aus dem Zusammenziehen der Isolationsschicht während des Sinterprozesses ergeben, zuverlässig eliminiert werden können, wenn die Widerstandsstrukturschicht in einem gesonderten Temperaturschritt aufgesintert wird.

Die Möglichkeit der Einzelschichtherstellung bietet eine weitere Variationsbreite der Sensorstruktur, da die Einzelschichten vorgefertigt werden können und je nach Anwendungsfall ein gewünschtes Sensorelement erzeugt werden kann.

Dieses Herstellungsverfahren hat den Vorteil, daß die einzelnen Strukturen in vielfacher Zahl auf einem einzigen Trägerblatt vorgefertigt werden können, ein Trägerblatt der Größe A5 kann bis zu 400 Stück solcher Strukturen aufnehmen.

Die Erfindung läßt zahlreiche Ausführungsformen zu. Eine davon soll anhand der in der Zeichnung dargestellten Figuren näher erläutert werden.

Es zeigt:
- Figur 1:: dehnungsempfindlicher Meßwiderstand.
- Figur 2:: Querschnitt eines auf einem Trägerblatt angeordneten dehnungsempfndlichen Meßwiderstandes.
- Figur 3:: Draufsicht auf eine in Dickschichttechnik hergestellte Meßbrükke mit dehnungsempfindlichen Widerständen.
- Figur 4:: Draufsicht auf einen in Hybridtechnik hergestellten mechanischelektrischen Wandler.

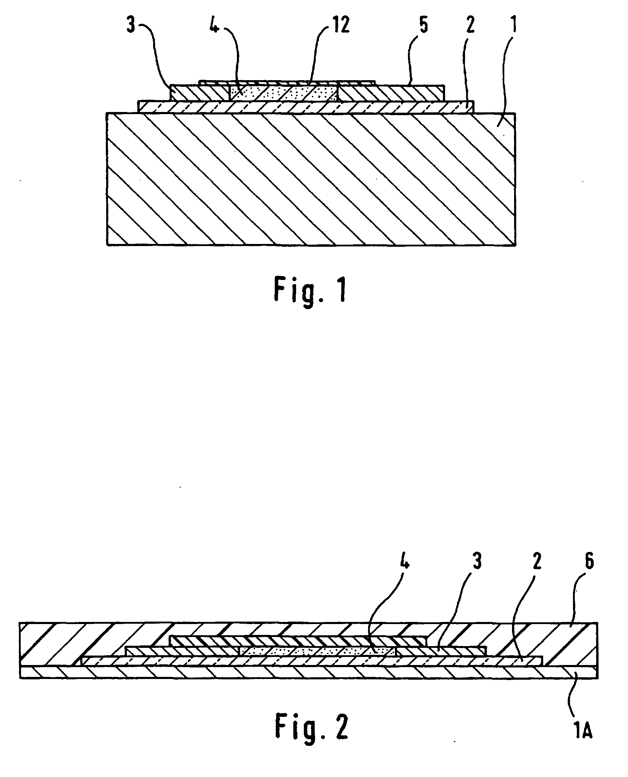

Der in Figur 1 dargestellte Dehnungsmeßstreifen weist einen Träger 1 auf, welcher aus Stahl besteht und auf welchen ein Dielektrikum 2 aufgebracht ist. Auf dem Dielektrikum 2 ist eine Leiterbahn 3 mit Kontaktflächen 5 zur elektrischen Verbindung des Widerstandes mit anderen Schaltungsteilen angeordnet. An der Leiterbahn 3 ist wiederum der dehnungsempfindliche Meßwiderstand 4 positioniert. Den Abschluß bildet eine Passivierungsschicht 12, die nur die Kontaktfläche 5 unbedeckt läßt. Der Träger 1 ist dabei eine Welle, an welche die Flächendehnung aufgrund einer mechanischen Belastung dieser direkt durch den Dehnungsmeßstreifen abgegriffen wird.

In Figur 2 ist eine Anordnung für einen dehnungsempfindlichen Widerstand dargestellt, der separat vom eigentlichen Trägerelement, der Welle 1, hergestellt und anschließend auf diese Welle 1 aufgebracht wird.

Auf einem Trägerblatt 1A, welches beispielsweise ein handelsübliches Wachspapier ist, wird eine nichtleitende Paste als Isolationsschicht 2 im Siebdruckverfahren aufgedruckt und getrocknet. Die Paste enthält eine Glasfritte, die bei geringerer Temperatur sinterbar ist als das Material der Welle 1. Nach der Trocknung der Paste wird die Leiterbahn 3 ebenfalls im Siebdruck aufgedruckt und getrocknet und anschließend zur Erzeugung der Widerstandsschicht 4 eine Platinteilchen enthaltende Leitpaste auf die Leiterbahnschicht 3 aufgedruckt. Nach der Trocknung dieser Widerstandsschicht 4 wird die gesamte Struktur, bestehend aus Dielektrikum 2, Leiterbahn 3 und Widerstand 4 mit einer flexiblen Kunstharzschicht 6 vollständig bedeckt, die als Folie wirkt. Diese Folie 6 haftet mit ihren Rändern auf dem Trägerblatt 1A.

Diese vorbereitete Anordnung wird nun nach dem Prinzip eines Abziehbildes vom Trägerblatt 1 A entfernt, indem die flexible Folienschicht 6 als Transporthilfe für die Struktur 2, 3, 4 genutzt wird.

Da die Haftung des Dielektrikums 2 an dem Trägerblatt 1A wesentlich geringer ist, als an der flexiblen Folienschicht 6, verbleibt beim Trennen vom Trägerblatt 1A und der flexiblen Folienschicht 6 die gesamte Widerstandsstruktur und das Dielektrikum 2 immer auf der Folienschicht 6.

Diese Folienschicht 6 wird so auf den Träger 1 aufgelegt, daß das Dielektrikum 2 direkt mit dem Träger 1 in Kontakt tritt. Da die über das Dielektrikum 2 hinausragende Folienschicht 6 haftende Eigenschaften besitzt, verbleibt die beschriebene Anordnung in ihrer auf dem Träger 1 aufgebrachten Lage.

Vor dem Aufbringen der Struktur auf die Welle 1 wird der Stahl mit einem Haftvermittler zur besseren Fixierung des Dielektrikums 2 auf der Welle 1 benetzt.

Beim sich daran anschließenden Hochtemperaturprozeß verbrennt bzw. vergast die flexible Folienschicht 6 bei einer Temperatur von annähernd 300°C. Bei einer weiteren Erhöhung der Temperatur auf annähernd 700 - 900°C versintert die Glasschicht des Dielektrikums 2 mit der Oberfläche der Welle 1. Bei diesem Aufsintem werden zwischen dem Dielektrikum 2 und der Welle 1 Oxidbrücken gebildet, die eine unmittelbare Verbindung zwischen Welle 1 und Dielektrikum 2 gewährleisten.

Nach dem rückstandslosen Vergasen der flexiblen Folienschicht 6 verbleiben die Strukturen in Form von Isolier-, Leitbahn- und Widerstandsschichten auf der Welle 1.

Diese starre innige Verbindung bedingt gegenüber der Klebetechnik eine geringere Dehnungshysterese.

Durch das Trägerblatt 1A ist die Anordnung sehr praktisch zu handhaben, da keine Gefahr des unbeabsichtigten Verklebens der flexiblen Folienschicht 6 vor Abziehen des Trägerblatts 1A besteht.

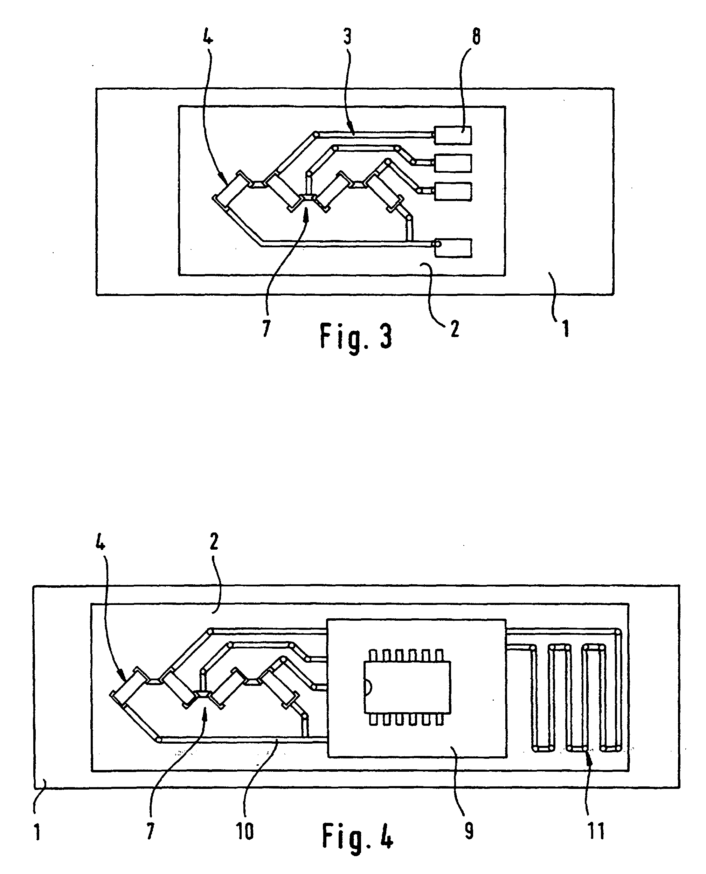

In Figur 3 ist eine Dickschichtdrehmomentsensoreinrichtung dargestellt, wie sie in Hilfskrafteinrichtungen von Kraftfahrzeugen, insbesondere bei elektrischen Lenkhilfesystemen und elektrisch-hydraulischen Lenkhilfesystemen Einsatz findet.

Das zu belastende Bauteil 1 ist in diesem Fall quaderförmig gestaltet. Auf dem Bauteil 1 ist ein Dielektrikum 2 angeordnet, auf welchen eine Widerstandsmeßbrücke 7 mit als Dehnungsmeßstreifen wirkenden Meßwiderständen 4 aufgebracht sind. Die Widerstandsmeßbrücke 7 besteht in bekannter Art und Weise aus 4 Widerständen 4, die über Leiterbahnen 3 mit elektrischen Kontaktflächen 8 der Widerstandsmeßbrücke 7 verbunden sind.

Das Dielektrikum 2 ist dabei mittig auf der rechteckigförmigen Oberfläche der Welle 1 angeordnet, in dem Bereich, wo bei einer mechanischen Beanspruchung der Welle 1 die Oberflächendehnung am deutlichsten selektierbar ist. Die Widerstände 4 der Widerstandsmeßbrücke 7 sind dabei w-ähnlich jeweils in einer Reihe hintereinander entlang der Richtung angeordnet, in welcher sich die Zone der maximalen Beanspruchung der Welle 1 erstreckt. Die Dehnung des mechanisch belasteten Bauelementes (Welle 1) wird von der DMS-Meßbrücke 7 direkt erfaßt. Die Elektronik zur Auswertung des Sensorelementes sowie zur Übertragung des Signales ist ebenfalls unmittelbar auf dem Dielektrikum 2 auf der Welle 1 realisiert, was in den Figuren 3 + 4 schematisch dargestellt ist.

Wie aus Figur 4 erkennbar, ist die aufgebrachte Widerstandsmeßbrücke 7 über eine Leiterbahn 10 mit der Auswerteelektronik 9 verbunden. Die Auswerteelektronik 9 besteht aus diskreten Bauelementen, die an den in Figur 3 dargestellten Kontaktflächen 8 mit der Widerstandsmeßbrücke 7 verbunden sind.

Zur berührungslosen Signalübertragung ist eine Spule 11 in Dickschichttechnik ebenfalls auf das Dielektrikum 2 aufgedruckt.

Die Kontaktierung der Auswerteelektronik erfolgt dabei vorteilhafterweise an den Kontaktflächen 8 durch Oberflächenmontage (SMD-Technik).

Die in den Figuren 3 und 4 dargestellten Strukturen lassen sich genau wie im Zusammenhang mit der Figur 1 erläutert auf einem Trägerblatt vorfertigen.

Das Beispiel des elektromechanischen Wandlers zeigt, daß die auf dem Trägerblatt aufgebrachten Strukturen recht vielfältig sein können.

Im vorliegenden Fall wird das Dielektrikum 2 ganzflächig in Form einer nicht leitenden Paste auf das Trägerblatt 1A aufgebracht. Darauf wird eine niederohmige Leitpaste mit der Struktur der Leiterbahnen 3 und der Kontaktflächen 8 auf das Dielektrikum 2 im Siebdruckverfahren aufgedruckt.

Nach dem Trocknen dieser Leiterbahnschicht 3 wird eine hochohmige Leitpaste mit den Strukturen der Meßwiderstände 4, der Spule 11 sowie von nicht weiter dargestellten Dickschichtwiderständen der Auswerteelektronik 9 aufgedruckt und getrocknet. Anschließend wird ein die Strukturen 3, 4, 11 vollständig bedeckender Kunstharzfilm 6 analog der Figur 2 aufgebracht.

Mit Hilfe dieser Schicht 6 wird die gesamte Struktur vom Trägerblatt 1A abgezogen und auf der Welle 1 positioniert.

An dieser Stelle hat es sich als vorteilhaft erwiesen, daß das Dielektrikum 2 einzeln auf einem Trägerblatt 1A erzeugt wird und mittels einer Folie auf die Welle 1 übertragen und einem Hochtemperaturprozeß unterzogen wird, wobei das Dielektrikum 2 mit dem Stahlträger 1 versintert.

Die Leiterbahnschicht 3 und die Widerstandsstrukturschicht 4 werden in einem weiteren Schritt auf demselben oder einem anderen Trägerblatt hergestellt und erst nach Abschluß der Hochtemperaturbehandlung des Dielektrikums 2 auf dieses aufgebracht und einer weiteren Hochtemperaturbehandlung unterzogen.

Die Reihenfolge des Schichtaufbaus des mechanisch-elektrischen Wandlers entspricht der in Figur 2 dargestellten Reihenfolge der Schichten des Dehnungsmeßstreifens mit dem Unterschied, daß die Schichten des mechanisch-elektrischen Wandlers entsprechend Figur 3 und 4 vielfältig strukturiert sind.

## Patentansprüche

1. Verfahren zur Herstellung eines elektrischen Widerstandes, insbesondere eines Dehnungsmeßstreifens, bei welchem auf einem Trägerelement nacheinander und übereinander eine Isolationsschicht (2) und eine Widerstandsschicht (4) aufgebracht werden, wobei die Isolationsschicht (2) oder die Widerstandsschicht (4) auf ein Trägerblatt (1A) aufgebracht wurde, wobei die die Schichten (2,4) tragende Seite des Trägerblattes (1A) mit einer flexiblen Folienschicht (6) überdeckt wird, deren Haftung an der Isolations-(2) oder Widerstandsschicht (4) größer ist, als die Haftung des Trägerblattes (1A) an der Isolations-(2) oder Widerstandsschicht (4) , und die Folienschicht (6) mit den Schichten (2,4;4,2) von dem Trägerblatt (1A) abgezogen wird und auf das Trägerelement (1) aufgebracht wird, wobei das Trägerelement (1) zum Ausbrennen der Folienschicht (6) und Aufsintem der Isolations-(2) oder Widerstandsschicht (4) anschließend wärmebeaufschlagt wird.

2. Verfahren nach Anspruch 1, wobei die Isolationsschicht (2) oder die Widerstandsschicht (4) in Drucktechnik auf das Trägerblatt (1A) aufgebracht und getrocknet wird.

3. Verfahren nach Anspruch 1 oder 2, wobei nach dem Aufbringen der Isolationsschicht (2) auf dem Trägerblatt (1A) eine Widerstandsschicht (4) auf dieser Isolationsschicht (2) aufgebracht wird, wobei anschließend die die Isolationsschicht (2) und die Widerstandsschicht (4) vollständig überdeckende Folienschicht (6) angeordnet wird.

4. Verfahren nach Anspruch 3, wobei die Isolationsschicht (2) in Form von einer Glasfritte auf das Trägerblatt (1A) aufgedruckt wird und nach dem Trocknen der Glasfritte eine Leitpaste als Widerstandsschicht (4) auf die Isolationsschicht (2) aufgedruckt und getrocknet wird, und anschließend die Folienschicht (6) aufgebracht wird.

5. Verfahren nach Anspruch 4, wobei die auf einem ersten Trägerblatt angeordnete und getrocknete Isolationsschicht (2) auf das Trägerelement (1) mittels der Folienschicht (6) aufgebracht und wärmebeaufschlagt wird, und anschließend die auf einem zweiten Trägerblatt gedruckte und getrocknete Widerstandsschicht (4) mit Hilfe der auf ihr angeordneten zweiten Folienschicht (6) auf der schon wärmebehandelten Isolationsschicht (2) angeordnet wird und anschließend ebenfalls wärmebehandelt wird.

6. Anwendung eines Verfahrens nach dem Anspruch 1, zur Herstellung eines mechanisch-elektrischen Wandlers mit dehnungsempfindlichen Meßwiderständen, die auf einer auf einem Trägerelement angeordneten Isolationsschicht aufgebracht werden, wobei die Meßwiderstände (4) und Strukturen einer Auswerteelektronik (9) auf einer gemeinsamen Isolationsschicht (2) aufgebracht werden, wobei mindestens die Isolationsschicht (2) auf ein Trägerblatt (1A) aufgebracht wird und die die Isolationsschicht (2) tragende Seite des Trägerblattes (1A) mit einer flexiblen Folienschicht (6) überdeckt wird, deren Haftung an der Isolationsschicht (2) größer ist als die Haftung des Trägerblattes (1A) an der Isolationsschicht (2), wobei die Folienschicht (6) mit der Isolationsschicht (2) von dem Trägerblatt (1A) abgezogen und auf das Trägerelement (1) aufgebracht wird, welches zum Ausbrennen der Folienschicht (6) und Aufsintern der Isolationsschicht (2) wärmebehandelt wird.

7. Anwendung nach Anspruch 6, wobei auf das Trägerblatt (1A) vor dem Aufbringen der Folienschicht (6) die Isolationsschicht (2) , eine Leiterbahnschicht (3) und darauf eine Widerstandsstrukturschicht, die die dehnungsempfindlichen Meßwiderstände (4) und Dickschichtwiderstände der Auswerteelektronik (9) enthält, nacheinander aufgedruckt und getrocknet werden, anschließend eine alle Elemente überdeckende Folienschicht (6) aufgebracht wird, wobei die Isolationsschicht (2) mit der Anordnung von Leiterbahn-(3) und Widerstandsstrukturschicht (4) mit Hilfe der Folienschicht (6) vom Trägerblatt (1A) entfernt und so auf das Trägerelement (1) aufgelegt wird, daß die Isolationsschicht (2) in direktem Kontakt mit dem Trägerelement (1) steht.

8. Arwendung nach Anspruch 7, wobei vor Auflegen der Isolationsschicht (2) das Trägerelement (1) mit einem Haftvermittler benetzt wird.

9. Anwendung nach einem der Ansprüche 6 bis 8, wobei das Trägerelement (1) ein mechanisch zu belastendes Bauelement ist.

10. Anwendung nach einem der Ansprüche 6 bis 8, wobei das Trägerelement (1) aus sinterfähigem Material besteht.

11. Anwendung nach Anspruch 6, wobei nach der Wärmebehandlung der Isolationsschicht (2) auf dem Trägerelement (1) die auf einem zweiten Trägerblatt hergestellte Leiterbahnschicht mit Hilfe einer über dieser Leiterbahnschicht (3) angeordneten zweiten Folienschicht (6) von diesem zweiten Trägerblatt abgezogen und auf der Isolationsschicht (2) positioniert wird, anschließend wärmebehandelt wird und nach der Wärmebehandlung der Leiterbahnschicht (3) die auf einem weiteren Trägerblatt erzeugte Widerstandsstrukturschicht mittels einer diese Widerstandsstrukturschicht (4) überdeckende dritten Folienschicht auf die Leiterbahnschicht (3) aufgebracht und ebenfalls wärmebehandelt wird.

## Claims

1. Method for producing an electrical resistor, in particular a strain gauge, in which an insulating layer (2) and a resistive layer (4) are applied one after the other and one on top of the other to a carrier element, the insulating layer (2) or the resistive layer (4) being applied to a backing sheet (1A), the side of the backing sheet (1A) that carries the layers (2, 4) being covered by a flexible film layer (6), the adhesion of which to the insulating layer (2) or the resistive layer (4) is greater than the adhesion of the backing sheet (1A) to the insulating layer (2) or the resistive layer (4), and the film layer (6) with the layers (2, 4; 4, 2) being pulled off from the backing sheet (1A) and applied to the carrier element (1), the carrier element (1) subsequently being subjected to heat for burning out the film layer (6) and sintering on the insulating layer (2) or resistive layer (4).

2. Method according to Claim 1, the insulating layer (2) or the resistive layer (4) being applied to the backing sheet (1A) by a printing technique and dried.

3. Method according to Claim 1 or 2, application of the insulating layer (2) to the backing sheet (1A) being followed by application of a resistive layer (4) to this insulating layer (2), after which the film layer (6) completely covering the insulating layer (2) and the resistive layer (4) is arranged.

4. Method according to Claim 3, the insulating layer (2) being printed onto the backing sheet (1A) in the form of a glass frit, and after drying of the glass frit a conductive paste is printed onto the insulating layer (2) as a resistive layer (4) and dried, after which the film layer (6) is applied.

5. Method according to Claim 4, the insulating layer (2) which has been arranged on a first backing sheet and dried being applied to the carrier element (1) by means of the film layer (6) and subjected to heat, and after that the resistive layer (4) which has been printed onto a second backing sheet and dried is arranged on the already heat-treated insulating layer (2) with the aid of the second film layer (6), arranged on it, and is subsequently likewise heat-treated.

6. Application of a method according to Claim 1 for producing a mechanical-electrical transducer with strain-sensitive measuring resistors which are applied to an insulating layer arranged on a carrier element, the measuring resistors (4) and structures of evaluation electronics (9) being applied to a common insulating layer (2), at least the insulating layer (2) being applied to a backing sheet (1A) and the side of the backing sheet (1A) that carries the insulating layer (2) being covered by a flexible film layer (6), the adhesion of which to the insulating layer (2) is greater than the adhesion of the backing sheet (1A) to the insulating layer (2), the film layer (6) with the insulating layer (2) being pulled off from the backing sheet (1A) and applied to the carrier element (1), which is heat-treated for burning out the film layer (6) and sintering on the insulating layer (2).

7. Application according to Claim 6, before the film layer (6) is applied, the insulating layer (2), a conductor track layer (3) and on top of that a resistive structure layer which contains the strain-sensitive measuring resistors (4) and thick-film resistors of the evaluation electronics (9) being printed onto the backing sheet (1A) one after the other and dried, a film layer (6) covering all the elements subsequently being applied, the insulating layer (2) with the arrangement of the conductor track layer (3) and the resistive structure layer (4) being removed from the backing sheet (1A) with the aid of the film layer (6) and placed onto the carrier element (1) in such a way that the insulating layer (2) is in direct contact with the carrier element (1).

8. Application according to Claim 7, the carrier element (1) being wetted with an adhesion promoter before the insulating layer (2) is placed on.

9. Application according to one of Claims 6 to 8, the carrier element (1) being a component which is to be subjected to mechanical loading.

10. Application according to one of Claims 6 to 8, the carrier element (1) consisting of material which can be sintered.

11. Application according to Claim 6, after the heat treatment of the insulating layer (2) on the carrier element (1), the conductor track layer produced on a second backing sheet being pulled off from this second backing sheet with the aid of a second film layer (6) arranged over this conductor track layer (3) and being positioned on the insulating layer (2), after which it is heat-treated and, after the heat treatment of the conductor track layer (3), the resistive structure layer produced on a further backing sheet is applied to the conductor track layer (3) by means of a third film layer covering this resistive structure layer (4) and is likewise heat-treated.

## Revendications

1. Procédé permettant de fabriquer une. résistance électrique, notamment une jauge de contrainte, au cours duquel une couche isolante (2) et une couche résistive (4) sont appliquées, l'une après l'autre et l'une sur l'autre, sur un élément support, la couche isolante (2) ou la couche résistive (4) ayant été appliquée sur une feuille support 1A, la face de la feuille support 1A supportant les couches (2, 4) étant recouverte par une couche membrane souple (6), dont l'adhérence sur la couche isolante (2) ou la couche résistive (4) est plus forte que l'adhérence de la feuille support (1A) sur la couche isolante (2) ou la couche résistive (4), et la couche membrane (6) étant retirée de la feuille support (1A) avec les couches (2, 4; 4, 2) et étant appliquée sur l'élément support (1), l'élément support (1) étant ensuite soumis à un traitement thermique pour brûler la couche membrane (6) et agglomérer la couche isolante (2) ou la couche résistive (4) par frittage.

2. Procédé selon la revendication 1, la couche isolante (2) ou la couche résistive (4) étant appliquées sur la feuille support (1A) par impression et séchées.

3. Procédé selon la revendication 1 ou 2, une couche résistive (4) étant, après l'application de la couche isolante (2) sur la feuille support (1A), appliquée sur cette couche isolante (2), la couche membrane (6), qui recouvre complètement la couche isolante (2) et la couche résistive (4), étant mise en place ensuite.

4. Procédé selon la revendication 3, la couche isolante (2) étant imprimée sur la feuille support (1A) sous la forme d'une fritte en verre et, après le séchage de la fritte en verre, une pâte conductive étant imprimée en tant que couche résistive (4) sur la couche isolante (2) et séchée et la couche membrane (6) étant appliquée ensuite.

5. Procédé selon la revendication 4, la couche isolante (2), disposée et séchée sur une première feuille support, étant appliquée sur l'élément support (1) au moyen de la couche membrane (6) et traitée thermiquement et, ensuite, la couche résistive (4), imprimée et séchée sur une deuxième feuille support, étant mise en place, à l'aide de la deuxième couche membrane (6) placée sur elle, sur la couche isolante (2), qui a déjà été traitée thermiquement, et étant, ensuite, également traitée thermiquement.

6. Application d'un procédé conforme à la revendication 1 et destinée à la fabrication d'un convertisseur mécanoélectrique avec des résistances de mesure sensibles à l'élongation, qui sont appliquées sur une couche isolante disposée sur un élément porteur, les résistances de mesure (4) et les structures d'une électronique d'évaluation (9) étant appliquées sur une couche isolante (2) commune, au moins la couche isolante (2) étant appliquée sur une feuille support (1A) et la face de la feuille support (1A) portant la couche isolante (2) étant recouverte par une couche membrane souple (6), dont l'adhérence sur la couche isolante (2) est plus forte que l'adhérence de la feuille support (1A) sur la couche isolante (2), et la couche membrane (6) étant retirée de la feuille support (1A) avec la couche isolante (2) et étant appliquée sur l'élément support (1), lequel est soumis à un traitement thermique pour brûler la couche membrane (6) et agglomérer la couche isolante (2) par frittage sur l'élément support (1).

7. Application selon la revendication 6, la couche isolante (2), une couche de pistes conductives (3) et, au-dessus, une couche de structure de résistances, qui comprend les résistances de mesure sensibles à l'élongation (4) et les résistances à couches épaisses de l'électronique d'évaluation (9), étant, avant l'application de la couche membrane (6), l'une après l'autre imprimées et séchées sur la feuille support (1A), une couche membrane (6) recouvrant tous les éléments étant, ensuite, appliquée, la couche isolante (2) avec la disposition de la couche de pistes conductives (3) et de la couche de structure de résistances (4) étant retirée de la feuille support (1A) à l'aide de la couche membrane (6) et étant appliquée sur l'élément support (1 ) de telle sorte que la couche isolante (2) est en contact direct avec l'élément support (1).

8. Application selon la revendication 7, l'élément support (1 ) étant, avant l'application de la couche isolante (2), humidifié avec un agent adhésif.

9. Application selon l'une des revendications 6 à 8, l'élément porteur (1) étant un composant à soumettre à un effort mécanique.

10. Application selon l'une des revendications 6 à 8, l'élément porteur (1) étant composé d'un matériau susceptible d'être fritté.

11. Application selon la revendication 6, la couche de pistes conductives fabriquée sur une deuxième feuille support étant, après le traitement thermique de la couche isolante (2) sur l'élément support (1 ), retirée de cette deuxième feuille support à l'aide d'une deuxième couche membrane (6) placée sur cette couche de pistes conductives et positionnée sur la couche isolante (2), puis traitée thermiquement et, après le traitement thermique de la couche de pistes conductives (3), la couche de structure de résistances produite sur une autre feuille support étant appliquée, au moyen d'une troisième couche membrane recouvrant cette couche de structure de résistances (4) sur la couche de pistes conductives (3) et, elle aussi, traitée thermiquement.
